# EUROPÄISCHE PATENTSCHRIFT

(11) **EP 1 627 132 B1**
(45) Veröffentlichungstag und Bekanntmachung des Hinweises auf die Patenterteilung: **13.12.2006**
(21) Anmeldenummer: 04728349.4
(22) Anmeldetag: 20.04.2004
(51) Int. Cl.: F01D 25/16, F16C 32/06, F15B 20/00

(54) **LAGER FÜR DIE AXIALE LAGERUNG EINES LÄUFERS EINER GASTURBINE, UND GASTURBINE**
BEARING FOR AXIALLY MOUNTING A ROTOR OF A GAS TURBINE, AND GAS TURBINE
PALIER POUR LE MONTAGE AXIAL D'UN ROTOR DE TURBINE A GAZ, ET TURBINE A GAZ

(30) Priorität: 23.05.2003 EP 03011741
(43) Veröffentlichungstag der Anmeldung: 22.02.2006
(73) Patentinhaber: SIEMENS AKTIENGESELLSCHAFT, 80333 München (DE)
(72) Erfinder: CERIC, Hajrudin, 46045 Oberhausen (DE); DUZIC, Andrija, 40223 Düsseldorf (DE); PASQUALINO, Salvatore, 40593 Düsseldorf (DE)
(86) Internationale Anmeldenummer: PCT/EP2004/004175
(87) Internationale Veröffentlichungsnummer: WO 2004/104379

(56) Entgegenhaltungen:
- DE-A- 2 357 881
- DE-A- 3 926 556
- US-A- 4 544 285
- US-A- 4 915 510
- US-A1- 2002 009 361

## Beschreibung

Die Erfindung betrifft ein Lager für die axiale Lagerung eines Läufers einer Gasturbine, mit einem drehfesten Lagerkörper, welcher zur axialen Verschiebung des Läufers aus einer ersten Betriebslage in eine zweite Betriebslage eine Hydraulikkolben-Anordnung aufweist und mit einem mit der Hydraulikkolben-Anordnung in strömungstechnischer Verbindung stehendem Hydrauliksystem. Ferner betrifft die Erfindung eine Gasturbine mit solch einem Lager.

Lager der vorgenannten Art sind an sich aus dem Stand der Technik bekannt. Der vorzugsweise den Läufer einer Gasturbine umgebende, ringförmig ausgebildete Lagerkörper dient der Anordnung einer Mehrzahl von Hydraulikkolben. Diese sind gegen am Läufer ausgebildete Anschlagsflächen gelagert, so dass eine Abstützung des Läufers in axialer Richtung erfolgt.

Solch ein Lager zum Verschieben des Rotors einer Gasturbine ist aus der US 2002/0009361 bekannt. Nachdem die Gasturbine und deren Rotor sich vollständig erwärmt haben und somit die temperaturbedingten Materialdehnungen abgeschlossen sind, erfolgt die Verschiebung des Rotors mittels des Lagers aus einer ersten Betriebslage in eine zweite Betriebslage entgegen der Strömungsrichtung des heißen Arbeitsmediums. Hierdurch werden in der Turbineneinheit die zwischen den Laufschaufelspitzen und diesen gegenüberliegenden Führungsringen gebildeten Radialspalte minimiert, so dass eine höhere Leistungsabgabe der Gasturbine erzielt und die Verluste über die Laufschaufelspitzen minimiert wird.

Durch den Ausfall von Hydraulikmittel bei bereits in der zweiten Betrieblage angeordnetem Rotor wird dieser durch die axiale Schubkraft des Arbeitsmediums zurück in die erste Betriebslage geschoben, welches zu einem schweren Schaden am Axiallager, am Rotor und an der Gasturbine führen kann.

Die Lage des Läufers lässt sich durch die Stellung der hydraulischen Kolben einstellen, was je nach eingestelltem Kolbenhub zu einer Justierung des Läufers der Gasturbine in axialer Richtung führt. Die Hydraulikkolben-Anordnung ermöglicht es mithin, den Läufer der Gasturbine in Relation zum Lager bedarfsgerecht auszurichten und ihn darüber hinaus aus einer ersten Betriebslage in eine zweite Betriebslage zu verschieben. In nachteiliger Weise erzeugt jedoch die sich beim Verschieben des Läufers einstellende axiale Geschwindigkeit des Läufers hohe dynamische Kräfte, die eine Überlastung des Lagerkörpers, des Lagergehäuses und der Gasturbine hervorrufen können. Infolge der axialen Verschiebung des Läufers kann es mithin zu einem Totalausfall des Lagers kommen. Dabei ist insbesondere das Verfahren des Läufers in Strömungsrichtung problematisch, da in dieser Verschieberichtung sehr hohe Schubkräfte auf den Läufer einwirken.

Darüber hinaus ist aus der DE 23 57 881 A1 und aus der US 4,915,510 jeweils ein Axiallager bekannt, welche eine unbeabsichtigte und durch sich ändernde axiale Schubkräfte hervorgerufene Axialverschiebung des Rotors kompensiert. Die DE 39 26 556 A1 zeigt ferner ein selbstausgleichendes Axiallager bei unsymmetrischen Axialbewegungen des Rotors.

Hiervon ausgehend ist es daher Aufgabe der Erfindung, unter Vermeidung der vorgenannten Nachteile ein Lager bereitzustellen, das die infolge hoher dynamischer Schubkräfte des Läufers auftretenden Lagerkräfte aufnimmt und eine sichere Lagerung des Läufers gewährleistet. Ferner ist es Aufgabe der Erfindung, hierzu eine Gasturbine anzugeben.

Die Aufgabe wird mit einem Lager mit der Merkmalen nach Anspruch 1 gelöst.

Zur Lösung der erstgenannten Aufgabe wird mit der Erfindung ein Lager der vorbeschriebenen Art vorgeschlagen, das dadurch gekennzeichnet ist, dass zur Begrenzung der verschiebegeschwindigkeit des Läufers zwischen Hydraulikkolben-Anordnung und Hydrauliksystem zumindest eine Drossel für das Hydraulikmittel vorgesehen ist.

Die erfindungsgemäße Zwischenschaltung einer Drossel bewirkt, dass das durch die einzelnen Kolben verdrängte Hydraulikmittel zunächst durch die Drossel geführt wird, was in vorteilhafter Weise zu einem Abbau der kinetischen Energie und zu einer vergleichsweise langsamen Verschiebung des Rotors führt. Die auf den Lagerkörper einwirkenden Belastungen können so reduziert werden, womit die Gefahr einer Überlastung minimiert ist. Selbst bei einer auf den Läufer einwirkenden maximalen Kraft kann von der zwischen Hydraulikkolben-Anordnung und Hydrauliksystem angeordneten Drossel genügend kinetische Energie dissipiert werden, so dass eine Überlastung des Lagers infolge der dynamischen Kräfte des Läufers verhindert wird. Eine sichere Lagerung des Läufers der Gasturbine ist damit auch bei einem etwaigen Auftreten hoher dynamischer Schubkräfte gewährleistet.

Die Drossel ist im Lagerkörper angeordnet. Selbst im ungewöhnlichen Falle eines Leitungsbruchs des Hydrauliksystems kann das Hydraulikmittel nur begrenzt schnell abfließen, was eine geringe und somit eine schadfreie Verschiebegeschwindigkeit des Läufers bewirkt. Lager, Läufer und Gasturbine werden so gegen Defekte geschützt, die durch eine zu große verschiebegeschwindigkeit des Rotors hervorgerufen werden würden. Dabei sind die Drosseln durch strömungsengpässe gebildet.

Zusätzlich kann das Lager in einer vorteilhaften Weiterbildung zumindest ein als Drossel ausgebildetes Stromregelventil zwischen Hydraulikkolben-Anordnung und Hydrauliksystem aufweisen. Diese Absicherung erhöht ebenfalls die Sicherheit des Gesamtsystems und ermöglicht darüber hinaus ggf. eine Einstellbarkeit der Strömungsgeschwindigkeit des Hydraulikmittels und somit der Verschiebgeschwindigkeit des Rotors.

Gemäß einem weiteren Merkmal der Erfindung ist vorgesehen, dass die Hydraulikkolben-Anordnung eine Mehrzahl von jeweils in entsprechenden Kolbenkammern angeordneten Kolben aufweist. Durch die Anordnung einer Mehrzahl von Hydraulikkolben wird in vorteilhafter Weise eine vergleichmäßigte Krafteinleitung erzielt, die ein gradliniges und positionsgenaues Verfahren des Läufers der Gasturbine ermöglicht.

Vorgesehen sein kann mit der Erfindung des weiteren, dass die Kolbenkammern hydraulisch ausgebildete Bohrungen sind. Selbstverständlich sind auch andere geometrische Ausgestaltungen denkbar, doch hat sich herausgestellt, dass insbesondere zylindrisch ausgebildete Kolbenkammern eine optimierte Kraftverteilung ermöglichen.

Gemäß einem besonderen Vorteil der Erfindung sind die Kolbenkammern strömungstechnisch miteinander verbunden. Erreicht wird hierdurch in vorteilhafter Weise ein Druckausgleich zwischen den einzelnen Kolbenkammern, wodurch zum einen eine gleichmäßige Lastverteilung, zum anderen aber auch ein gleichmäßig gradliniges Verschieben des Läufers der Gasturbine erreicht wird. Die einzelnen Kolbenkammern können dabei strömungstechnisch über entsprechend ausgebildete Bohrungen an einen gemeinsamen Druckraum angeschlossen sein oder aber über entsprechend ausgebildete Bohrungen direkt strömungstechnisch miteinander in Verbindung stehen. Entscheidend ist, dass ein Druckausgleich zwischen den einzelnen Kolbenkammern erfolgen kann.

Gemäß einem weiteren Merkmal der Erfindung ist die Hydraulikkolben-Anordnung ringförmig ausgebildet und umgibt den im Querschnitt kreisförmig ausgebildeten Läufer der Gasturbine. Für eine optimierte Kraftübertragung der Hydraulikkolben auf den Läufer sind die Kolben in Bezug auf die ringförmig ausgestaltete Hydraulikkolben-Anordnung in äquidistanten Abständen zueinander angeordnet, so dass eine gleichförmige Kraftverteilung erzielt werden kann. Je nach Ausgestaltung und Größe der ringförmig ausgebildeten Hydraulikkolben-Anordnung kann der die Kolbenkammern miteinander verbindende, gemeinsame Druckraum gleichfalls ringförmig ausgebildet sein und die Hydraulikkolben-Anordnung umgeben.

Gemäß einem weiteren Merkmal der Erfindung sind zwei von einander separat ausgebildete Hydraulikkolben-Anordnungen vorgesehen, die einander gegenüberliegend am Lagerkörper angeordnet sind. Bei dieser Ausgestaltung des erfindungsgemäßen Lagers verfügt der Lagerkörper über insgesamt zwei Hydraulikkolben-Anordnungen, die je nach Ausgestaltung jeweils über mehrere Kolben verfügen. Die Kolben der ersten Hydraulikkolben-Anordnung wirken mit einer ersten Anschlagsfläche und die Kolben der zweiten Hydraulikkolben-Anordnung mit einer zweiten Anschlagsfläche des Läufers zusammen. Bei einer Verschiebung des Läufers der Gasturbine werden infolge dieser vorbeschriebenen Anordnung die Kolben der einen Hydraulikkolben-Anordnung ausgefahren, wohingegen die Kolben der anderen Hydraulikkolben-Anordnung eingefahren werden. Bei einer Verschiebung des Läufers in entgegengesetzter Richtung erfolgt eine Kolbenverschiebung der Hydraulikkolben-Anordnungen gleichfalls in entgegengesetzter Richtung. In Bezug auf die Schubrichtung des Läufers wird die eine Hydraulikkolben-Anordnung als Hauptspurlager und die andere Hydraulikkolben-Anordnung als Nebenspurlager bezeichnet.

Gemäß einem weiteren Merkmal der Erfindung sind die beiden Hydraulikkolben-Anordnungen, das heißt das Hauptspurlager und das Nebenspurlager strömungstechnisch miteinander verbunden. Das infolge einer Verschiebung des Läufers aus einer der beiden Hydraulikkolben-Anordnungen heraus verdrängte Hydraulikmedium kann so zum Druckaufbau innerhalb der anderen Hydraulikkolben-Anordnung verwendet werden.

Ist der Läufer der Gasturbine entgegen der Schubrichtung verschoben, so kann beim Ausfall der Hydraulikmittelversorgung, beispielsweise durch einen Leitungsbruch oder dergleichen, ein gesteuertes Abstellen der Gasturbine nicht mehr gewährleistet werden. Begründet ist dies dadurch, dass die Hydraulikkolben-Anordnung der Nebenspurseite des Lagerkörpers, das heißt die Nebenspurlagerung nicht mehr mit Hydraulikmittel versorgt werden kann. Um auch im Falle eines Ausfalls der Hydraulikmittelversorgung ein gezieltes Abstellen der Gasturbine ermöglichen zu können, wird gemäß einem weiteren Merkmal der Erfindung vorgeschlagen, dass die beiden Hydraulikkolben-Anordnungen unter Zwischenschaltung eines 4/2-Wegeventils strömungstechnisch miteinander verbunden sind. Die Anordnung eines solchen Wegeventils ermöglicht es in vorteilhafter Weise, dass auch bei einem Ausfall der Hydraulikmittelversorgung Hydraulikmittel aus den Zylinderkammern der Hauptspurseite des Lagerkörpers in die Zylinderkammern des Nebenspurlagers gefördert werden können. Zu diesem Zweck ist das 4/2-Wege-Ventil lediglich in stromlose Position zu schalten. Infolge der Schubkraft des Läufers der Gasturbine auf die Kolben des Hauptspurlagers wird sodann das Hydraulikmittel aus den Kolbenkammern der Hydraulikkolben-Anordnung der Hauptspurseite in die Kolbenkammern des Nebenspurlagers gefördert. Ein gesteuertes Abstellen der Gasturbine kann so auch bei einem Ausfall der Hydraulikmittelversorgung gewährleistet werden.

Besonders vorteilhaft weist eine Gasturbine ein Lager mit den vorgenannten Merkmalen auf.

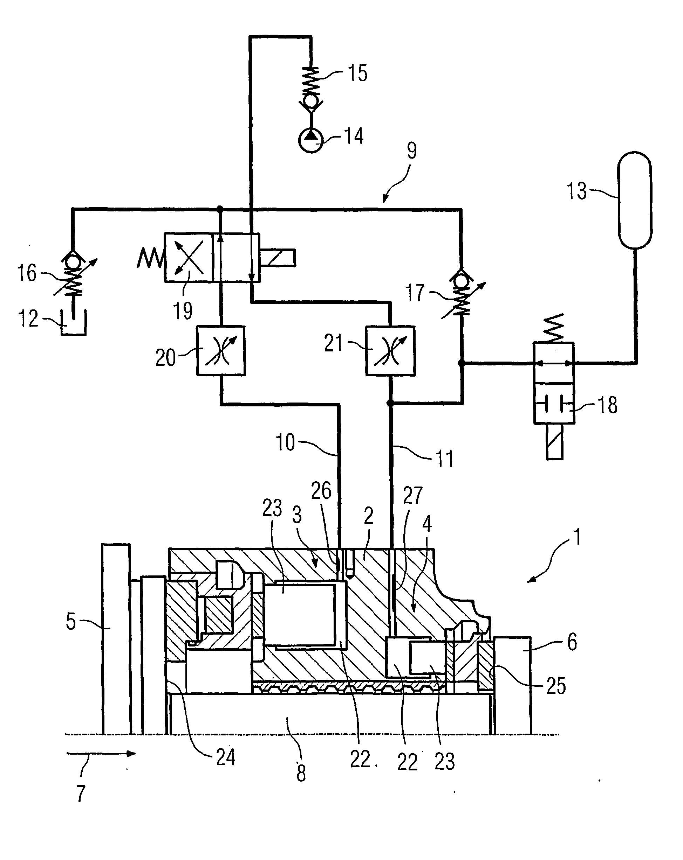

Weitere Vorteile und Merkmale der Erfindung ergeben sich aus der Beschreibung anhand Fig. 1, die in teilgeschnittener Seitenansicht ein erfindungsgemäß ausgebildetes Lager zeigt.

Dargestellt ist in Fig. 1 in teilgeschnittener Seitenansicht das erfindungsgemäße Lager 1. Dieses dient der axialen Lagerung und Verschiebung eines Läufers 8 einer Gasturbine und beinhaltet einen Lagerkörper 2, der der Aufnahme einer ersten Hydraulikkolben-Anordnung 3 sowie einer zweiten Hydraulikkolben-Anordnung 4 dient. In Bezug auf die Schubrichtung 7 des Läufers 8 ist dabei die Hydraulikkolben-Anordnung 3 auf der Hauptspurseite 5 und die Hydraulikkolben-Anordnung 4 auf der Nebenspurseite 6 des Läufers 8 angeordnet.

Gebildet ist sowohl die Hydraulikkolben-Anordnung 3 als auch die Hydraulikkolben-Anordnung 4 aus einer Mehrzahl jeweils in Kolbenkammern 22 geführten Kolben 23. Über verschieblich angeordnete Zwischenelemente wirken die Kolben 23 der Hydraulikkolben-Anordnung 3 auf die am Läufer 8 ausgebildete Anschlagsfläche 24 und die Kolben 23 der Hydraulikkolben-Anordnung 4 auf die gleichfalls am Läufer 8 ausgebildete Anschlagsfläche 25 ein, so dass insgesamt eine axial verschiebliche Lagerung des Läufers 8 ausgebildet ist. Über die Anordnung der Hydraulikkolben-Anordnungen 3 und 4 im Lagerkörper 2 kann der Läufer 8 beispielsweise einer Gasturbine in axialer Richtung verschieblich positioniert werden. Zu diesem Zweck sind die Kolbenkammern 22 wahlweise mit Hydraulikmittel, beispielsweise Hydrauliköl, befüllbar, wobei die Hydraulikkolben-Anordnung 3 und die Hydraulikkolben-Anordnung 4 über die Leitungen 10 und 11 an ein gemeinsames Hydrauliksystem 9 angeschlossen sind.

Bestandteile des Hydrauliksystems 9 sind ein Tank 12, ein Speicher 13, eine Hydraulikpumpe 14, Rückschlagventile 15, 16 und 17, ein 2/2-Wegeventil 18, ein 4/2-Wegeventil 19 sowie einstellbare Stromregelventile 20 und 21. Zwischen der Hydraulikkolben-Anordnung 3 und 4 und dem Hydrauliksystem 9 sind Drosseln 26 und 27 vorgesehen. Die Drosseln 26, 27 werden durch direkt im Lagerkörper 2 angeordnete Strömungsengpässe für das Hydraulikmittel gebildet, ohne dass die Zwischenschaltung einer Leitung für Hydraulikmittel erfolgt. Darüber hinaus dienen die Stromregelventile 20, 21 als weitere Drosseln zwischen der Hydraulikkolben-Anordnung 3 bzw. 4 und dem Hydrauliksystem 9.

Die Bewegung des Läufers 8 wird durch dessen Axialverschiebung gegenüber dem Lagerkörper 2 erreicht, indem Hydraulikmittel entweder in die Hydraulikkolben-Anordnung 3 oder die Hydraulikkolben-Anordnung 4 gepumpt wird. Für den Fall, dass Hydraulikmittel in die Hydraulikkolben-Anordnung 3 gedrückt wird, fahren die Kolben 23 entsprechend der eingefüllten Menge an Hydraulikmittel aus und wirken über die zwischengeordneten Elemente auf die Anschlagsfläche 24 des Läufers 8 ein. Erreicht wird hierdurch eine Verschiebung des Läufers 8 entgegen der Schubrichtung 7 - das heißt von einer ersten Betriebslage in eine zweite Betriebslage zur Reduzierung der im Stand der Technik genannten Radialspalte -, also in Bezug auf die Bildebene nach links. Bedingt durch diese Längsverschiebung des Läufers 8 wirkt die Anschlagsfläche 25 auf die Hydraulikkolben-Anordnung 4 ein, infolgedessen aus den entsprechenden Kolbenkammern 22 Hydraulikflüssigkeit verdrängt und über die Leitung 11 dem Hydrauliksystem 9 zugeführt wird.

Um zu vermeiden, dass die beim Verschieben des Läufers 8 sich einstellende axiale Geschwindigkeit des Läufers 8 zu hohe dynamische Kräfte erzeugt, die eine Überlastung des Lagerkörpers 2 hervorrufen könnten, ist erfindungsgemäß zwischen Hydraulikkolben-Anordnung 3 einerseits sowie Hydraulikkolben-Anordnung 4 andererseits und dem Hydrauliksystem 9 die Stromregelventile 20, 21 und im Lagerkörper 2 eingebettete Drosseln 26, 27 zwischengeschaltet. Diese können auch bei einer im Betrieb maximal auftretenden Kraft auf den Läufer genügend kinetische Energie dissipieren, so dass eine Überlastung des Lagers 1 infolge der dynamischen Kräfte des Läufers 8 verhindert wird.

Bei der Belastung, die während des fehlerfreien Betriebes der Gasturbine bei einer vorgesehenen Verschiebung des Läufers 8 auftritt, begrenzen die einstellbaren Stromregelventile 20, 21 die Strömungsgeschwindigkeit des Hydraulikmittels auf einen vorgegebenen Wert. Die Verschiebung des Läufers 8 sowohl in Schubrichtung des Heißgases sowie entgegen der Schubrichtung erfolgt so mit der vorgegebenen vergleichsweise langsamen Geschwindigkeit.

Bei einem Fehlerfall im Hydrauliksystem 9, bei dem Ausfall der Stromregelventile 20, 21 oder selbst bei einem Leitungsbruch der am Lagerkörper 2 angeschlossenen Leitung 10, 11 des Hydrauliksystems 9 begrenzen die im Lagerkörper 2 vorgesehenen Drosseln 26, 27 die Strömungsgeschwindigkeit des Hydraulikmittels. Die unvorhergesehene, in Schubrichtung 7 verlaufende Verschiebung des Läufers 8 aus der zweiten Betriebslage zurück in die erste Betriebslage erfolgt dann mit einer den Lagerkörper 2 vor Schäden schützenden Geschwindigkeit, die größer sein kann als die beim fehlerfreien Betrieb gewünschte Geschwindigkeit, welche mittels der Stromregelventile eingestellt wird.

Die Strömungsengpässe im Lagerkörper, welche die Drossel 26, 27 bilden, werden für eine angenommene Maximalbelastung berechnet, die höher als die Betriebsbelastung ist.

Lediglich im Fehlerfall begrenzen die Drosseln 26,27 die Verschiebegeschwindigkeit des Läufers, wohingegen die Stromregelventile 20, 21 während einer vorgesehenen Verschiebung des Läufers dessen zulässige Verschiebegeschwindigkeit begrenzen.

Erfindungsgemäß ist des weiteren vorgesehen, dass die Hydraulikkolben-Anordnung 3 und die Hydraulikkolben-Anordnung 4 unter Zwischenordnung des 4/2-Wegeventils 19 über das Hydrauliksystem 9 strömungstechnisch miteinander verbunden sind.

Darüber hinaus ist bei aus dem Stand der Technik vorbekannten Lagereinheiten ist es bei einem entgegen der Schubrichtung verschobenen Läufer im Falle des Ausfalls der Hydraulikmittelversorgung nicht möglich, ein gesteuertes Abstellen der Gasturbine zu gewährleisten, da dann die Hydraulikkolben-Anordnung 4 auf der Nebenspurseite 6 des Lagers 1 nicht mit Hydraulikmittel versorgt werden kann. Abhilfe schafft hier das erfindungsgemäß zwischen Hauptspurseite 5 und Nebenspurseite 6 zwischengeordnete 4/2-Wegeventil. Dieses kann nämlich im Falle des Ausfalls der Hydraulikmittelversorgung in eine stromlose Position geschaltet werden. Infolge der Schubkraft des Läufers 8 auf die Kolben 23 der Hydraulikkolben-Anordnung 3 wird nämlich Hydraulikmittel aus den Kolbenkammern 22 der Hauptspurseite 5 über das Hydrauliksystem 9 in die Kolbenkammern 22 der Nebenspurseite 6 gefördert. Somit baut sich Druck auf der Seite der Nebenspur auf, so daß im Falle des Druckabfalls der Läufer dort zu halten kommt, wo er gleichfalls stünde, wenn das Lager nicht hydraulisch verstellbar wäre. Hierdurch kann auch bei einer Unterbrechung der Hydraulikmittelversorgung eine Notlauf-Verschiebung des Läufers 8 erreicht werden, infolgedessen ein gesteuertes Abstellen der Gasturbine möglich bleibt.

## Patentansprüche

1. Lager (1) für die axiale Lagerung eines Läufers (8) einer Gasturbine,
mit einem drehfesten Lagerkörper (2), welcher zur axialen Verschiebung des Läufers (8) aus einer ersten Betriebslage in eine zweite Betriebslage eine Hydraulikkolben-Anordnung (3, 4) aufweist und
mit einem mit der Hydraulikkolben-Anordnung (3, 4) in strömungstechnischer Verbindung stehendem Hydrauliksystem (9),
**dadurch gekennzeichnet, dass**
zur Begrenzung der Verschiebegeschwindigkeit des Läufers
zwischen Hydraulikkolben-Anordnung (3, 4) und Hydrauliksystem (9) zumindest eine im Lagerkörper (2) angeordnete Drossel (26, 27) für das Hydraulikmittel vorgesehen ist.

2. Lager (1) nach Anspruch 1,
**dadurch gekennzeichnet, dass**
die Drossel (26, 27) durch im Lagerkörper (2) angeordnete Strömungsengpässe gebildet wird, ohne die Zwischenschaltung einer Leitung.

3. Lager (1) nach einem der Ansprüche 1 bis 2,
**dadurch gekennzeichnet, dass**
die Hydraulikkolben-Anordnung (3, 4) eine Mehrzahl von jeweils in entsprechenden Kolbenkammern (22) angeordneten Kolben (23) aufweist.

4. Lager (1) nach einem der Ansprüche 1 bis 3,
**dadurch gekennzeichnet, dass**
die Kolbenkammern (22) zylindrisch ausgebildete Bohrungen sind.

5. Lager (1) nach einem der vorhergehenden Ansprüche,
**dadurch gekennzeichnet, dass**
die Kolbenkammern (22) strömungstechnisch miteinander verbunden sind.

6. Lager (1) nach einem der vorhergehenden Ansprüche,
**dadurch gekennzeichnet, dass**
die Hydraulikkolben-Anordnung (3, 4) ringförmig ausgebildet ist.

7. Lager (1) nach einem der vorhergehenden Ansprüche,
**dadurch gekennzeichnet, dass**
zwei voneinander separat ausgebildete Hydraulikkolben-Anordnungen (3, 4) vorgesehen sind, die einander gegenüberliegend am Lagerkörper (2) angeordnet sind.

8. Lager (1) nach einem der vorhergehenden Ansprüche,
**dadurch gekennzeichnet, dass**
die beiden Hydraulikkolben-Anordnungen (3, 4) strömungstechnisch miteinander verbunden sind.

9. Lager (1) nach einem der vorhergehenden Ansprüche,
**dadurch gekennzeichnet, dass**
die beiden Hydraulikkolben-Anordnungen unter Zwischenordnung eines 4/2-Wegeventils (19) strömungstechnisch miteinander in Verbindung stehen.

10. Gasturbine mit einem Lager (1) nach einem der vorhergehenden Ansprüche.

## Claims

1. A bearing for axially mounting a rotor (8) of a gas turbine, having a rotationally fixed bearing body (2) which has a hydraulic piston arrangement (3, 4) for axially displacing the rotor (8) from a first operating position into a second operating position, and having a hydraulic system (9) fluidically connected to the hydraulic piston arrangement (3, 4), **characterized in that**, to limit the displacement speed of the rotor, at least one restrictor (26, 27), arranged in the bearing body (2) and intended for the hydraulic medium is provided between hydraulic piston arrangement (3, 4) and hydraulic system (9).

2. Bearing (1) according to claim 1, **characterized in that** the restrictor (26, 27) is formed by flow constrictions arranged in the bearing body (2) without a line being interposed.

3. Bearing (1) according to one of claims 1 to 2, **characterized in that** the hydraulic piston arrangement (3, 4) has a plurality of pistons (23) arranged in corresponding respective piston chambers (22).

4. Bearing (1) according one of claims 1 to 3, **characterized in that** the piston chambers (22) are bores of cylindrical design.

5. Bearing (1) according to one of the preceding claims, **characterized in that** the piston chambers (22) are fluidically connected to one another.

6. Bearing (1) according to one of the preceding claims, **characterized in that** the hydraulic piston arrangement (3, 4) is of annular design.

7. Bearing (1) according to one of the preceding claims, **characterized in that** two hydraulic piston arrangements (3, 4) formed separately from one another are provided and are arranged opposite one another on the bearing body (2).

8. Bearing (1) according to one of the preceding claims, **characterized in that** the two hydraulic piston arrangements (3, 4) are fluidically connected to one another.

9. Bearing (1) according to one of the preceding claims, **characterized in that** the two hydraulic piston arrangements are fluidically connected to one another with a 4/2-way directional control valve (19) interposed.

10. A gas turbine having a bearing (1) as claimed in one of the preceding claims.

## Revendications

1. Palier (1) pour supporter axialement un rotor (8) d'une turbine à gaz,
comprenant un corps (2) de palier rigide en rotation qui, pour le déplacement axial du rotor (8) d'une première position de fonctionnement à une deuxième position de fonctionnement, a un dispositif (3, 4) à piston hydraulique et
comprenant un système (9) hydraulique en communication du point de vue de la technique des fluides avec le dispositif (3, 4) à piston hydraulique,
**caractérisé en ce que**
pour limiter la vitesse de déplacement du rotor
il est prévu entre le dispositif (3, 4) à piston hydraulique et le système (9) hydraulique au moins un étranglement (26, 27) pour le fluide hydraulique, qui est disposé dans le corps (2) de palier.

2. Palier (1) suivant la revendication 1,
**caractérisé en ce que**
l'étranglement (26, 27) est formé par des passages étroits d'écoulement disposés dans le corps (2) de palier, sans l'interposition d'un conduit.

3. Palier (1) suivant l'une des revendications 1 à 2,
**caractérisé en ce que**
le dispositif (3, 4) à piston hydraulique a une multiplicité de pistons (23) disposés respectivement dans des chambres (22) correspondantes de piston.

4. Palier (1) suivant l'une des revendications 1 à 3,
**caractérisé en ce que**
les chambres (22) de piston sont des trous constitués de manière cylindrique.

5. Palier (1) suivant l'une des revendications précédentes,
**caractérisé en ce que** les chambres (22) de piston communiquent entre elles du point de vue de la technique des fluides.

6. Palier (1) suivant l'une des revendications précédentes,
**caractérisé en ce que**
le dispositif (3, 4) à piston hydraulique est constitué sous forme annulaire.

7. Palier (1) suivant l'une des revendications précédentes,
**caractérisé en ce que**
il est prévu deux dispositifs (3, 4) à piston hydraulique constitués séparément l'un de l'autre et disposés l'un en face de l'autre sur le corps (2) de palier.

8. Palier (1) suivant l'une des revendications précédentes,
**caractérisé en ce que**
les deux dispositifs (3, 4) à piston hydraulique communiquent ensemble du point de vue de la technique des fluides.

9. Palier (1) suivant l'une des revendications précédentes,
**caractérisé en ce que**
les deux dispositifs à piston hydraulique communiquent entre eux du point de vue de la technique des fluides avec interposition d'une vanne (19) à 4/2 voies.

10. Turbine à gaz ayant un palier (1) suivant l'une des revendications précédentes.
